# EUROPEAN PATENT APPLICATION

(11) **EP 0 834 416 A1**
(43) Date of publication of application: **08.04.1998**
(21) Application number: 97117146.7
(22) Date of filing: 02.10.1997
(51) Int. Cl.: B60K 20/04

(54) **Vehicle transmission control device**

(30) Priority: 04.10.1996 IT TO960198 U
(71) Applicant: ROLTRA MORSE S.p.A., 86077 Pozzilli (IT)
(72) Inventor: Ottino, Franco Giovanni, 56017 San Giuliano Terme (IT)
(74) Representative: Franzolin, Luigi

(57) **Abstract**

The device (1) has a substantially box-shaped supporting element (2) fitted to the vehicle body (3), and in turn having a top opening (4), and a bottom opening (21) closed by a cover (22) fitted along its outer periphery to the edges defining the bottom opening (21) and which is subject to in-service vibration. The supporting element (2) has two lateral walls (19a, 19b) laterally defining the bottom opening (21); a front and a rear wall (18a, 18b) crosswise to the lateral walls (19a, 19b) and transversely defining the bottom opening (21); and an inner wall (27) interposed between the lateral walls (19a, 19b), extending parallel to the lateral walls (19a, 19b), extending crosswise to the front wall (18a) from the center line of the front wall (18a), and defining a further constraint for the cover (22) to reduce the in-service vibration of the cover (22).

## Description

The present invention relates to a vehicle transmission control device or, more simply, to a shift control device.

Shift control devices are known, which comprise a substantially box-shaped supporting element fitted to the vehicle floor, and having a top opening connecting the inside of the supporting element to the passenger compartment of the vehicle, and through which is loosely fitted a gear lever connected to the inside of the supporting element so as to rotate about a first axis substantially longitudinal with respect to the vehicle, and about a second axis perpendicular to the first, to respectively select a gear and engage/disengage the selected gear.

The supporting element also comprises a bottom opening for permitting assembly of the internal members of the shift control device; and a cover for closing the opening, and fitted to the lateral edges of the opening by means of a number of screws.

As the supporting element is of considerable size and volume, on account of the numerous members housed inside it and the operating movements the members and the gear lever are called upon to perform, the cover of the supporting element is also fairly large and, being secured solely along the outer periphery, is fairly unstable and therefore subject to severe in-service vibration.

Such vibration is mainly of low frequency, and contributes towards increasing the noise generated inside the supporting element or generated outside and transmitted by the supporting element, such as the noise generated by the exhaust pipe normally located close to the supporting element, or noise generated outside the vehicle and reflected towards the supporting element by the road surface. Moreover, all these noise sources are amplified by the "resonance box" defined by the inside volume of the supporting element, and are transmitted to the passenger compartment through the top opening, thus increasing the total discernible noise level inside the passenger compartment, and so causing discomfort to the driver and passengers.

It is an object of the present invention to provide a control device designed to eliminate the aforementioned drawbacks.

According to the present invention, there is provided a control device for a vehicle transmission, comprising:
- a substantially box-shaped supporting element fitted to a vehicle body and having a top opening; and
- a gear lever extending through said top opening and connected to said supporting element so as to rotate about a first and a second axis substantially perpendicular to each other, to respectively select a gear and engage/disengage a selected gear;
   said supporting element having a bottom opening closed by a cover fitted along its outer periphery to the edges defining said bottom opening, and which is subject to in-service vibration;
   characterized in that said supporting element comprises at least one inner wall defining a further constraint for said cover, so as to reduce the in-service vibration of the cover.

A preferred, non-limiting embodiment of the present invention will be described by way of example with reference to the accompanying drawings, in which:
Figure 1 shows a partially sectioned front view of a control device in accordance with the present invention;
Figure 2 shows a partially sectioned side view of the Figure 1 device;
Figure 3 shows a partially sectioned top plan view of the Figure 1 device.

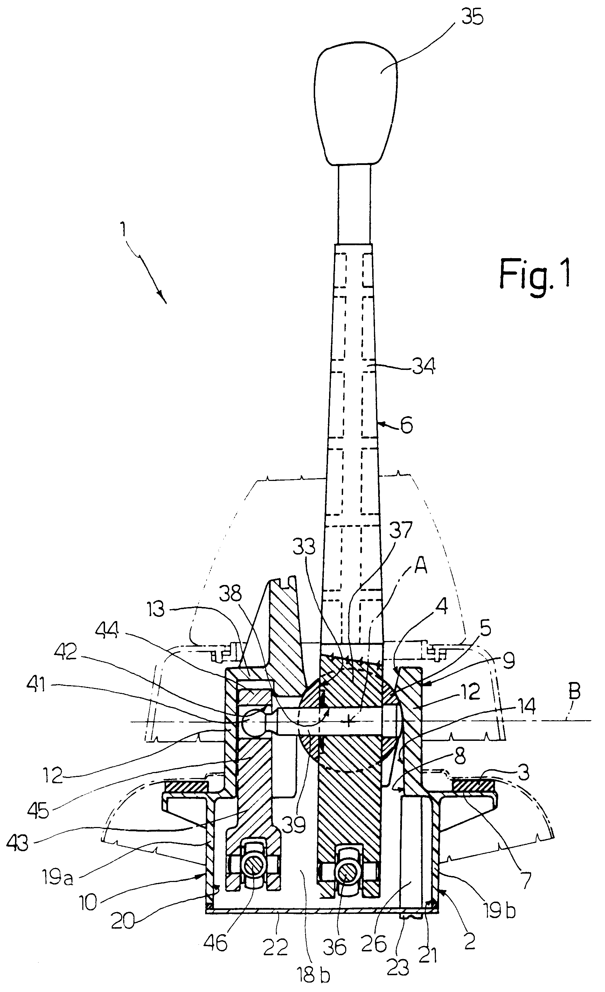

Number 1 in Figures 1, 2 and 3 indicates a control device for a vehicle transmission (not shown).

Device 1 comprises a substantially box-shaped supporting element 2 connected rigidly to the vehicle body 3, and having a substantially rectangular top opening 4 connecting the inside of supporting element 2 to the passenger compartment of the vehicle.

Device 1 also comprises a substantially cylindrical intermediate element 5 housed inside supporting element 2 at top opening 4, and which rotates with respect to supporting element 2 about a first axis A substantially longitudinal with respect to the vehicle; and a gear lever 6 extending loosely through top opening 4 of supporting element 2, and which is fitted to intermediate element 5 and rotates with respect to intermediate element 5 about a second axis B perpendicular to axis A and crosswise to the vehicle.

Gear lever 6 therefore rotates with respect to supporting element 2 about axis A (fixed) and about axis B (movable with intermediate element 5) to respectively select a gear and engage/disengage the selected gear; and the operation of gear lever 6 is transmitted to the vehicle transmission (not shown) by relay elements described later on.

Supporting element 2 comprises a flange 7 for fitment to body 3, and having, at an end portion, a substantially rectangular through opening 8; a substantially tubular top body 9 extending upwards from the edges of opening 8; and a bottom body 10 extending downwards from flange 7 and elongated in the direction of axis A.

Top body 9 comprises a front and a rear wall 11 crosswise to axis A; two lateral walls 12 substantially parallel to axis A and crosswise to axis B; and a top wall 13 substantially in the form of a rectangular frame and defining top opening 4. Walls 11, 12, 13 define a first cavity 14 communicating externally at the top through top opening 4.

Bottom body 10 comprises a front and a rear wall 18a, 18b crosswise to axis A; and two lateral walls 19a, 19b substantially parallel to axis A and crosswise to axis B; and walls 18a, 18b, 19a, 19b define a second cavity 20 communicating with cavity 14 through opening 8 and externally through a bottom opening 21.

Bottom body 10 also comprises a cover 22 for closing bottom opening 21, and which faces flange 7 and is fitted to the bottom edges of walls 18a, 18b, 19a, 19b by means of a number of screws 23 fitted through respective holes (not shown) along the outer periphery of cover 22, and engaging corresponding threaded dead holes 25 formed in walls 18a, 18b, 19a, 19b of bottom body 10.

More specifically, holes 25 are formed in respective appendixes 26 extending integrally along walls 18a, 18b, 19a, 19b of bottom body 10 and inwards of supporting element 2, and of which four are located at respective end portions of walls 19a, 19b, and another two are located at the respective center lines of wall 18a and one of the lateral walls (19a).

According to the present invention, supporting element 2 also comprises an inner wall 27 housed inside bottom body 10, interposed between and parallel to lateral walls 19a, 19b of bottom body 10, and extending transversely and integrally from appendix 26 of wall 18a. More specifically, inner wall 27 is shorter in length than walls 19a, 19b of bottom body 10, and extends inside cavity 20 up to a point close to the center line of cover 22.

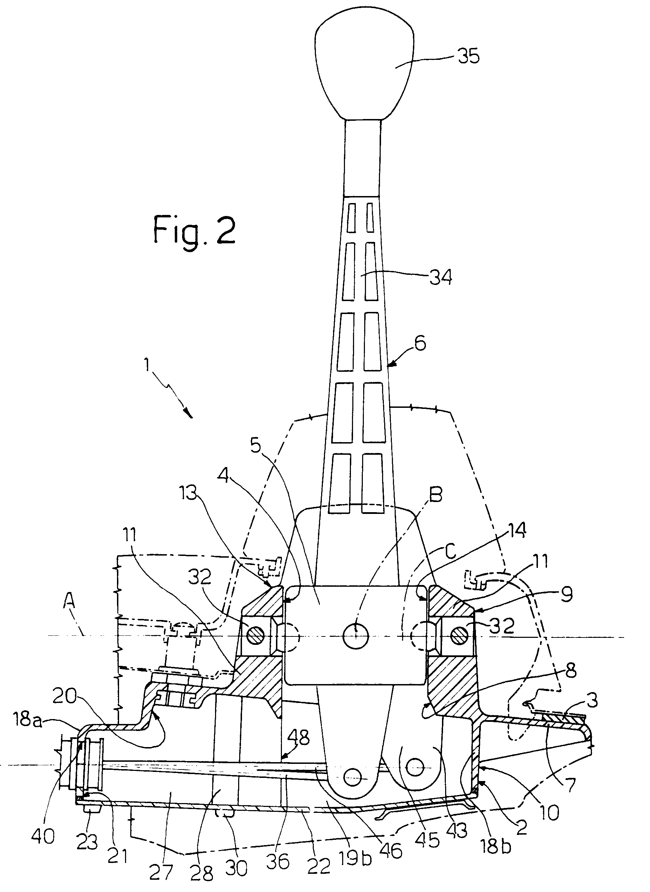

Inner wall 27 also comprises a substantially cylindrical intermediate projection 28 in which is formed a threaded dead hole 29 engaged by a screw 30 (Figure 2) fitted through a corresponding hole (not shown) in cover 22, so that inner wall 27 defines a further constraint, at a substantially central portion of cover 22, between cover 22 and bottom body 10.

Intermediate element 5 is substantially cylindrical with a longitudinal axis coincident with axis A, is housed inside cavity 14 so as to close top opening 4, is hinged to walls 11 of top body 9 by respective end pins 32 of axis A, and is of an axial length equal to the length of top opening 4, and of a diameter larger than the width of top opening 4.

Intermediate element 5 also comprises a through opening 33 (Figure 1) perpendicular to axes A and B.

Gear lever 6 comprises a rod 34 extending through opening 33 in intermediate element 5, and the top end of which, outside device 1 and inside the passenger compartment of the vehicle, is fitted with a knob 35, and the bottom end of which is fitted with a gear engagement/disengagement control cable 36. Rod 34 also comprises a portion 37 housed in sliding manner with a small amount of lateral clearance inside opening 33 of intermediate element 5, and having a through hole 38, of axis B, defining a seat for a hinge pin 39 permitting rotation with respect to intermediate element 5.

More specifically, the bottom end of rod 34 is located close to a bottom portion of wall 19b contiguous to wall 18b of bottom body 10, and cable 36 comes out of supporting element 2 through a hole 40 formed in wall 18a.

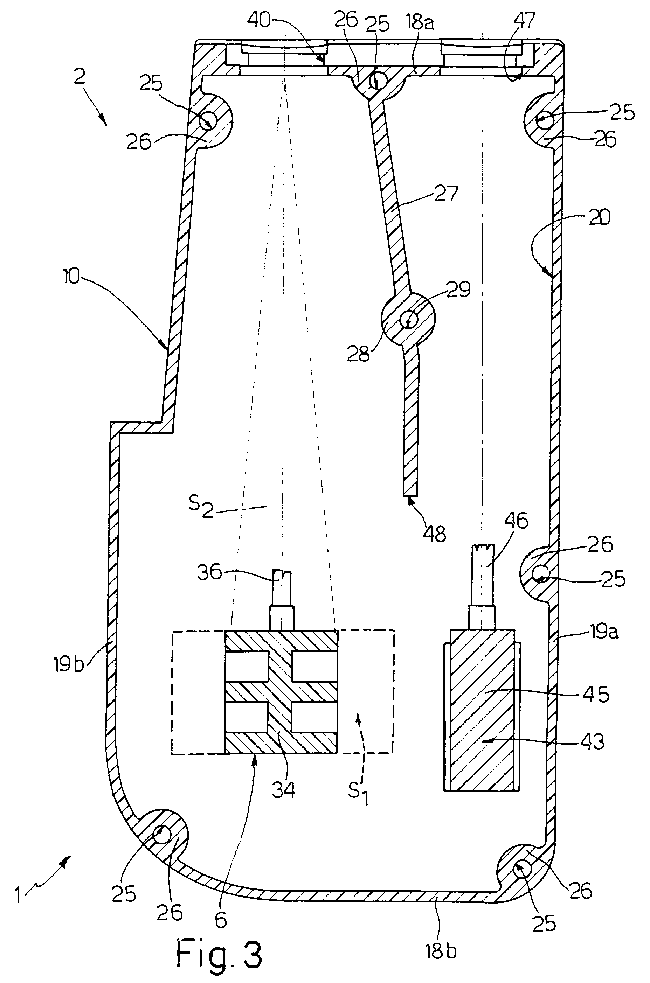

The bottom end of rod 34 is appropriately spaced with respect to wall 19b and wall 18b of bottom body 10 to prevent interfering with walls 18b, 19b when selecting a gear. In fact, when selecting a gear, gear lever 6 is moved laterally, so that gear lever 6 and intermediate element 5 rotate about axis A, and the bottom end of rod 34 is moved parallel to axis B and in opposite directions with respect to a central position corresponding to the rest position of gear lever 6. During which movement, the bottom end of rod 34 moves within a substantially rectangular area S₁ (shown by the dash line in Figure 3), and cable 36 fitted to the bottom end of rod 34 moves within a substantially triangular area S₂ (shown by the dot-and-dash line in Figure 3).

Pin 39 engages hole 38 in gear lever 6 interferentially, so as to be connected rigidly to gear lever 6, and projects axially outwards of intermediate element 5 with a spherical head 41 engaging in radially slack manner a hole 42, of axis B, formed in a relay lever 43 adjacent to gear lever 6.

Relay lever 43 is substantially in the form of a quadrant, and is hinged to the contiguous lateral wall 12 about an axis C perpendicular to axis A and shifted rearwards with respect to axis B. Relay lever 43 comprises a first arm 44 extending parallel to axis A, and in which is formed hole 42 engaged by spherical head 41; and a second arm 45 extending substantially downwards, and to the bottom end of which is hinged a gear selection control cable 46.

More specifically, relay lever 43 is substantially flat, and is located close to an end portion of wall 19a contiguous to wall 18b of bottom body 10; and cable 46 comes out of supporting element 2 through a hole 47 formed in wall 18a.

Cables 36 and 46 extend respectively from gear lever 6 and relay lever 43 on opposite sides of inner wall 27, which is therefore interposed between cables 36 and 46, and has an end edge 48 located close to gear lever 6 and relay lever 43.

Operation of device 1 is known, and therefore described only briefly.

To select a gear, knob 35 of gear lever 6 is moved laterally, so that gear lever 6 and intermediate element 5 rotate about axis A, and relay lever 43 is rotated about axis C to activate gear selection control cable 46.

To engage the gear, on the other hand, knob 35 of gear lever 6 is moved backwards or forwards, so that gear lever 6 and gear engagement/disengagement control cable 36 are rotated about axis B.

The advantages of the shift device according to the present invention will be clear from the foregoing description.

Interposing a wall (27) between the lateral walls 19a, 19b of bottom body 10 enables cover 22 to be fitted to bottom body 10 not only along the outer periphery but also at a central portion facing inner wall 27, thus greatly increasing the rigidity of cover 22 and so reducing vibration, particularly low-frequency vibration, of the cover.

Moreover, inner wall 27 reduces the resonance box defined by the inside volume of supporting element 2, and therefore reduces amplification by the resonance box of the noise generated inside supporting element 2 by operation of the members housed inside it and by operation of gear lever 6.

This therefore reduces the total discernible noise level transmitted to the passenger compartment through top opening 4, thus greatly reducing discomfort to the driver and passengers.

Clearly, changes may be made to device 1 as described and illustrated herein without, however, departing from the scope of the present invention.

## Claims

1. A control device (1) for a vehicle transmission, comprising:
- a substantially box-shaped supporting element (2) fitted to a vehicle body (3) and having a top opening (4); and
- a gear lever (6) extending through said top opening (4) and connected to said supporting element (2) so as to rotate about a first and a second axis (A, B) substantially perpendicular to each other, to respectively select a gear and engage/disengage a selected gear;
said supporting element (2) having a bottom opening (21) closed by a cover (22) fitted along an outer peripheral edge to the edges defining said bottom opening (21), and which is subject to in-service vibration;
characterized in that said supporting element (2) comprises at least one inner wall (27) defining a further constraint for said cover (22), so as to reduce the in-service vibration of the cover (22).

2. A device as claimed in Claim 1, for a supporting element (2) comprising two lateral walls (19a, 19b) substantially parallel to said first axis (A) and laterally defining said bottom opening (21), and a front and a rear wall (18a, 18b) crosswise to the lateral walls (19a, 19b) and transversely defining said bottom opening (21); characterized in that said inner wall (27) is interposed between said lateral walls (19a, 19b), parallel to the lateral walls (19a, 19b), and extends crosswise to said front wall (18a) from an intermediate portion of the front wall (18a).

3. A device as claimed in Claim 2, characterized in that said inner wall (27) is shorter in length than said lateral walls (19a, 19b).

4. A device as claimed in Claim 2 or 3, characterized in that said inner wall (27) is integral with said front wall (18a).

5. A device as claimed in any one of the foregoing Claims, and comprising:
- a first remote control member (36) connected to said gear lever (6), and for transmitting motion to said transmission in response to rotation of said gear lever (6) about said second axis (B);
- a relay lever (43) hinged to said supporting element (2) about a third axis (C) distinct from said first and second axes (A, B), and connected in articulated manner to said gear lever (6); and
- a second remote control member (46) connected to said relay lever (43), and for transmitting motion to said transmission in response to rotation of said gear lever (6) about said first axis (A);
characterized in that said inner wall (27) is interposed between said first and said second remote control member (36, 46).
